# EUROPEAN PATENT SPECIFICATION

(11) **EP 2 698 236 B1**
(45) Date of publication and mention of the grant of the patent: **18.02.2015**
(21) Application number: 13178878.8
(22) Date of filing: 01.08.2013
(51) Int. Cl.: B28B 5/02, B65G 17/32, B65G 17/38

(54) **Transport system and a method for application thereof**
Transportsystem und Verwendungsverfahren dafür
Système de transport et son procédé d'application

(30) Priority: 15.08.2012 NL 2009324
(43) Date of publication of application: 19.02.2014
(73) Proprietor: Beheermaatschappij De Boer Nijmegen B.V., 6604 LL Wijchen (NL)
(72) Inventor: Kosman, Wilhelmus Jacobus Maria, 6562 DA Groesbeek (NL)
(74) Representative: Haan, Raimond

(56) References cited:
- NL-A- 8 802 568
- NL-A- 9 400 663

## Description

The invention relates to a transport system for circulating transport of one or more mould container parts.

The invention also relates to a method for applying such a transport system.

Known from the prior art is a device supplied by applicant under the name Aberson for manufacturing green bricks from clay for the brick manufacturing industry, wherein the mould container parts are displaced in a lying plane. The mould container parts here follow a rectangular horizontal path.

In an Aberson device it is the case that a mould container part is filled in successive steps: in a first step for instance only the even mould cavities are filled, after which the odd mould cavities are filled in a second step. Although the clay supplying means displace in some embodiments, it is also possible for the mould container part to be displaced under the clay supplying means.

An advantage of such a known Aberson device is that the transport of the mould container parts, wherein the mould container parts are displaced in a fixed orientation in a lying plane, enables a simple exchange of mould container parts. This on the one hand makes it possible to place mould container parts with a different brick shape. A defective mould container can on the other hand be easily removed for repair and replaced with one which is undamaged.

A first drawback of such a known Aberson device is that the pressing speed of this device is limited because the elongate mould container parts have to be displaced in both transverse direction and longitudinal direction during their cycle. Mould container parts with between six and ten mould cavities are applied in Aberson devices. When there are more than ten mould cavities, the longitudinal displacement of the mould container part in the critical process step already becomes too great. A mould container part with ten mould cavities has a length l of about 2200 mm, a width w of about 310 mm and a height h of about 90 mm. Because the elongate mould container parts are considerably longer than they are wide, the minimum time required for the longitudinal displacement of a mould container part defines the maximum achievable pressing speed. In the case of a mould container part with ten mould cavities the maximum pressing speed with the prior art Aberson devices is about 24 strokes per minute.

A further drawback of such a known Aberson device is that a considerable number of drives are required to advance the mould container parts at the different stages of the production process.

Known from the Netherlands patent NL 8802568 is a transport system for circulating transport of one or more mould container parts as according to the preamble of claim 1. This known device comprises lifting members with which the mould containers are lifted temporarily out of the transport member so that they can be pushed into a filling device by a sliding device. Once the mould containers have passed through this filling device and filled with clay material, the mould containers are fed back into the transport member by an infeed device.

An object of the present invention is to provide a transport system and brick manufacturing device wherein said drawbacks do not occur, or at least do so to lesser extent, but wherein the flexibility is preferably retained as far as possible.

Said object is achieved with the transport system for circulating transport of one or more mould container parts according to the invention, comprising:
- a transport device, comprising:
   - at least two conveyors arranged some distance adjacently of each other and mutually connected with one or more connecting members;
   - wherein at least one mould container part displacer extending some distance outside the path of the conveyors is arranged on or close to each connecting member; and
   - wherein close to each connecting member are provided one or more drying plate displacers which extend out of a mould container part bearing surface at least a distance H which is greater than the height h of a mould container part for the purpose of supporting the mould container parts on the conveyor;
   - at least one mould container part arrangeable non-fixedly on the mould container part bearing surfaces and against the one or more mould container part displacers and comprising one or more mould cavities for forming therein a green brick from clay;
- wherein height displacing means are provided with which the mould container part is displaceable in the height between a raised filling position and a lowered transport position;
- wherein the upper side of the mould container part in the raised filling position connects substantially flush with the upper side of the drying plate displacer or a wear strip optionally arranged thereon; and
- wherein the mould container part is supported in the lowered transport position by the mould container part bearing surface of the conveyor, and the drying plate displacer extends some distance above the upper side of the mould container part.

The pressing speed can be increased using the circulating transport system according to the invention to about 30 strokes per minute. This is an increase of 25% relative to the prior art Aberson devices, wherein the mould container parts are moved in a rectangular horizontal plane. The production capacity is therefore already increased by 25% by the pressing speed alone.

It is otherwise noted that using a transport system according to the invention mould container parts with more than 18 mould cavities can be applied, which would increase the production capacity still further.

Because the mould container parts are arrangeable non-fixedly on the bearing surfaces and against the one or more mould container part displacers, they are easily removable from the transport device and exchangeable for other mould container parts.

The conveyors are arranged some distance from each other, whereby an open space is obtained between the conveyors where devices are placeable for supporting, displacing in the height or setting into vibration the mould container parts.

The conveyors are for instance chains formed from link parts.

Height displacing means are provided with which the mould container part is displaceable in the height between a raised filling position and a lowered transport position, wherein the upper side of the mould container part in the raised filling position connects substantially flush with the upper side of the drying plate displacer or a wear strip optionally arranged thereon, and wherein the mould container part is supported in the lowered transport position by the mould container part bearing surface of the conveyor, and the drying plate displacer extends some distance above the upper side of the mould container part.

In the raised filling position the drying plate displacer or the wear strip optionally arranged thereon connects substantially flush with the upper side of the mould container part, thereby providing a substantially continuous surface with mould cavities. The drying plate displacer with the optional wear strip functions here as a seal between successive mould container parts which has the purpose of preventing as far as possible clay falling between the mould container parts.

According to a preferred embodiment, one or more protruding stop parts are provided on at least one of the two longitudinal sides of the mould container part. Because of these stop parts the mould container parts can hang in the lower path. Supporting of the mould container parts in the lower part of the conveyors, wherein the mould container parts hang upside down - i.e. with the mould cavities facing downward - is hereby unnecessary.

One or more stop parts are preferably provided on both longitudinal sides of the mould container part.

According to a further preferred embodiment, the one or more protruding stop parts in a lower path, in which the mould container parts hang upside down, are supported by the connecting member and/or the drying plate displacer.

According to yet another preferred embodiment, the one or more connecting members which mutually connect the conveyors are also configured as the drying plate displacers, and for this purpose extend out of the mould container part bearing surface on the conveyor at least a distance H which is greater than the height h of a mould container part.

The drying plate displacers are arranged substantially transversely of the direction of forward movement of the conveyors which rotate during operation in a substantially upright plane. When the mould container part is situated in a lower transport position supported by the mould container part bearing surface of the conveyor, the drying plate displacer protrudes a distance H-h above the mould container part. This distance H-h is preferably at least 10 mm and more preferably about 25-30 mm.

The connecting members connect the two conveyors and for this purpose span the whole distance between the two conveyors. In the preferred embodiment wherein the connecting members also function as the drying plate displacers, they also fulfil a closing function between successive mould container parts.

In a particularly favourable embodiment the drying plate displacer is provided on the upper side thereof with a wear strip, in which case in the raised filling position of the mould container part the upper side of this wear strip connects substantially flush with the upper surface of this mould container part.

In the lowered transport position the drying plate displacer with wear strip optionally arranged thereon protrudes some distance above the upper side of the mould container part so that it can function as stop for the purpose of advancing a drying plate to be arranged on the mould container part.

The height displacement takes place for instance via a roller track or via a gradually rising support member such as a steel plate.

According to yet another preferred embodiment, the mould container part displacer comprises at least two finger parts which extend some distance out of the paths of the conveyors and which are connected directly or indirectly to the conveyors. A direct connection is recommended as this provides the stiffest connection.

According to yet another preferred embodiment, the one or more stop parts comprise one or more strips and/or one or more profile parts arranged over substantially the whole distance between the finger parts on the longitudinal sides of the mould container part, wherein the finger parts extending from the conveyors function as stop for the strips and/or profile parts present between the finger parts and thus form a limitation to the longitudinal movement of the mould container part.

It is noted that the mould container parts are arranged transversely of the transporting direction of the conveyors. A longitudinal movement of a mould container part is therefore a movement in the longitudinal direction of the mould container part itself, i.e. transversely of the transporting direction of the conveyors.

According to yet another preferred embodiment, the length of the strips and/or the profile parts arranged between the finger parts is at least the combined distance of one mould cavity width v and one thickness t of a partition shorter than the distance between the finger parts, so that the mould container part is reciprocally displaceable at least over this distance v+t in its longitudinal direction.

Because the mould container part in this embodiment is reciprocally displaceable at least one mould cavity in its longitudinal direction, the transport system is suitable for application in brick manufacturing devices wherein the mould container part is displaced reciprocally under the clay supplying means so as to be thus filled in successive steps. As described in the preamble, it is possible to envisage only the even mould cavities being filled in a first step, after which the odd mould cavities are filled in a second step.

According to yet another preferred embodiment, the one or more profile parts comprise at least one recess which is arranged in longitudinal direction and in which a resilient seal can be accommodated. This seal is for instance a rubber strip and preferably extends round substantially the whole length of the profile parts.

According to yet another preferred embodiment, a bearing strip forming the mould container part bearing surface is provided on the conveyor. This bearing strip is preferably mounted releasably, whereby it functions as wear part and is easily exchangeable for another.

According to yet another preferred embodiment, the bearing strip and finger parts are embodied as one wear part mountable releasably on the conveyors.

The invention further relates to a device for manufacturing green bricks from clay for the brick manufacturing industry, comprising a transport system with a transport device and one or more mould container parts.

According to a preferred embodiment, the device is a pressing device comprising a filling station for pressing clay under pressure into the mould cavities; and wherein the mould container parts are supported in a raised filling position at the location of the filling station by a supporting device arranged between the conveyors situated some distance from each other.

According to a further preferred embodiment, the device comprises vibrating means which are arranged in the lower path, in which the mould container parts hang upside down, between the conveyors situated some distance from each other and which are configured to set the mould container parts into vibration at this position such that the green bricks present in the mould cavities release from the mould cavities under the combined influence of gravitational force and vibration.

The invention further relates to a method for transporting one or more mould container parts with a transport system according to the invention in a device according to the invention, comprising the steps of:
- displacing the mould container part to a raised filling position with height displacing means during or prior to filling of the mould cavities present in the mould container part with clay;
- filling the mould cavities in the mould container part with clay using a filling station;
- trimming clay protruding from the mould cavities above the upper side of the mould container part using trimming means;
- displacing the mould container part from the raised filling position to a lowered transport position using height displacing means, wherein the mould container part is supported in this lowered transport position by the mould container part bearing surface of the conveyor, and the drying plate displacer extends some distance above the upper side of the mould container part; and
- co-displacing with the drying plate displacer a drying plate arranged on the upper side of the mould container part.

According to a preferred embodiment, the method further comprises the step of supporting the mould container parts with a supporting device at least during the filling step under the filling station.

Because the mould container parts are supported by a supporting device during filling thereof with clay, even mould container parts manufactured from plastic provide sufficient stiffness. Plastic mould container parts have the further advantage of being relatively light, and thereby easy to handle for exchange with other ones, as permitted by the transport system of the invention.

It is noted that, as a result of the relatively large mutual distance between the two conveyors, a very stiff and therefore heavy mould container part would be required if no support were available during pressing of the clay into the mould cavities.

According to a further preferred embodiment, the method further comprises the step of setting the mould container parts into vibration in the lower path using vibrating means arranged between the conveyors located some distance from each other, so that the green bricks present in the mould cavities release from the mould cavities under the combined influence of gravitational force and vibration.

Preferred embodiments of the present invention are further elucidated in the following description with reference to the drawing, in which:
Figure 1 is a schematic top view of a transport system of a prior art Aberson device;
Figure 2 is a side view of a brick manufacturing device with a transport system according to the invention;
Figure 3 is a perspective view of the transport system according to the invention;
Figure 4 is a detail view of the transport system shown in figure 3;
Figure 5 is a perspective view of the transport system shown in figure 3;
Figure 6 is a perspective detail view of the device shown in figure 2 at the position of the pressing block;
Figure 7 is a perspective detail view from the upper side of the front bend of the device shown in figure 2;
Figure 8 is a perspective detail view of the lower part of the front bend of the device shown in figure 2;
Figures 9 and 10 are further perspective detail views of positions in the lower path of the device shown in figure 2; and
Figure 11 is a perspective view of an alternative preferred embodiment of the transport system according to the invention.

### Prior art

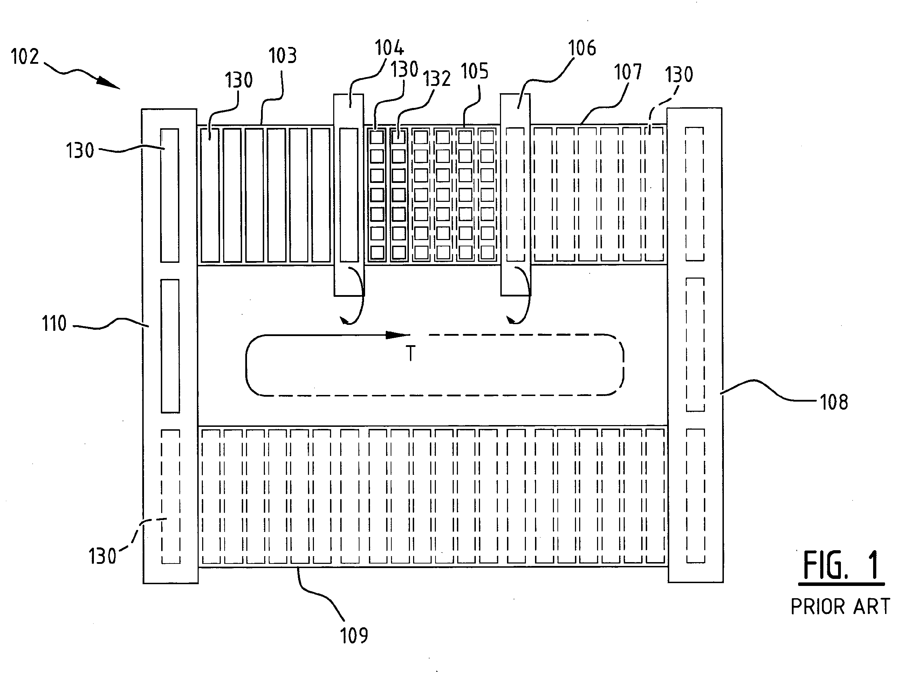

The schematic top view of a prior art Aberson device shown in figure 1 shows a rectangular horizontal mould container transport, wherein the mould container parts 130 are advanced stepwise and in groups. For the sake of clarity the different mould container parts 130 are drawn somewhat spaced apart, while in reality they connect to each other, whereby they can be pushed forward as a group.

The successive process steps followed by a mould container part 130 in the direction of transport T are elucidated with reference to figure 1.

In a first transverse transport step 103 the mould container parts 130, which at that moment are situated upside down on the mould container transport, are washed and covered with sand from the underside.

Following the first transverse transport step 103, mould container parts 130 are rotated through 180° about their longitudinal axis in the first revolving step 104, whereby they will follow the second transverse transport step 105 with the mould cavities 132 facing upward.

In the second transverse transport step 105 the mould cavities 132 of mould container parts 130 are filled with clay and the upper side of mould cavities 132 is trimmed.

After a drying plate (not shown) has been placed on the mould container parts 130 filled with clay, they are turned over in a second revolving step 106, wherein the mould container parts are once again oriented upside down.

In the third transverse transport step 107 the green bricks are released from the mould container parts and discharged (not shown) on the drying plates. Mould container parts 130 are then transported via a first longitudinal transport step 108, a fourth transverse transport step 109 and a second longitudinal transport step 110 back to the beginning of the first transverse transport step 103.

The longitudinal transport steps 108 and 110 require the greatest bridging distance, and the minimum time required for the longitudinal displacement of mould container part 130 defines the maximum achievable pressing speed. In the case of a mould container part 130 with 18 mould cavities the pressing speed is therefore limited to about 24 strokes a minute.

### The invention

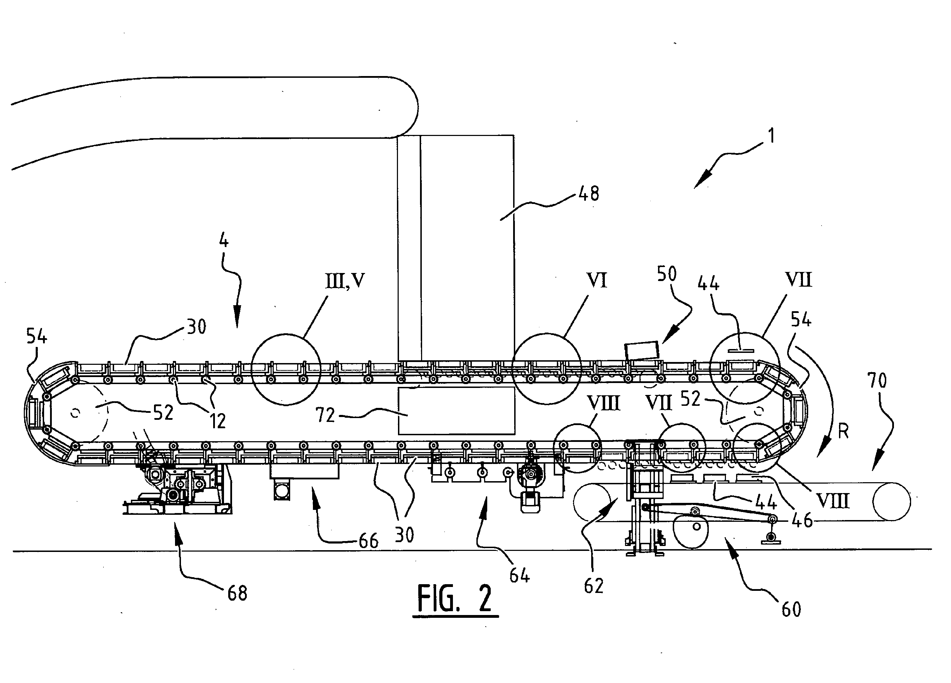

The brick manufacturing device 1 shown in figure 2 comprises a transport system 2 for circulating transport of mould container parts 30 with a transport device 1. Roman numerals refer to views of several detail figures.

Mould container parts 30 are transported in the direction of transport R with the circulating conveyors 6, wherein in an advantageous embodiment they are supported under filling station 48 by a supporting device 72.

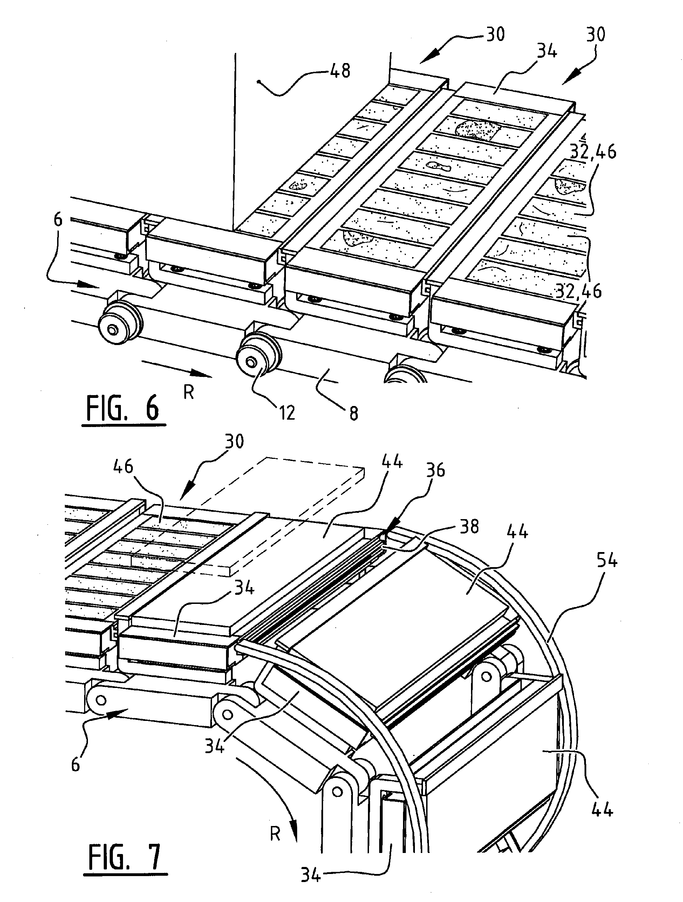

The mould cavities 32 present in mould container parts 30 are filled with clay by filling station 48 (figure 6), after which the mould container parts 30 filled with clay pass below a trimmer 50.

During the filling and subsequent trimming the mould container part 30 is located in a raised filling position in which drying plate displacer 26, or a wear strip 22 optionally arranged thereon, connect substantially flush with the upper side of mould container part 30. This creates a substantially continuous surface with mould cavities 32, wherein drying plate displacer 26 with the optional wear strip 22 functions as a seal between successive mould container parts 30 which has the purpose of preventing as far as possible clay falling between the mould container parts. A further seal is preferably formed by profile part 36 with resilient seal 40 arrangeable therein, as will be further elucidated below.

Once clay has been arranged in mould cavities 32 of mould container parts 30, and excess clay has been trimmed by a trimmer 50, mould container part 30 is moved to a lowered transport position and a drying plate 44 is placed on mould container part 30 (figure 7).

In the lowered transport position the drying plate displacer 26 with wear strip 22 optionally arranged thereon protrudes some distance above the upper side of mould container part 30, whereby it functions as stop for the purpose of advancing the drying plate 44 just placed on mould container part 32.

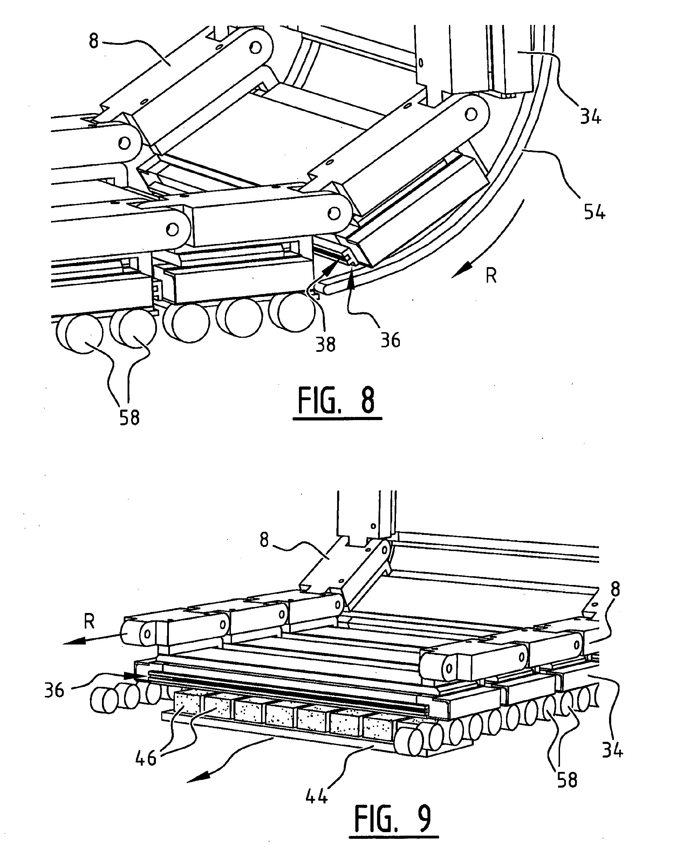

Conveyors 6 run over chain wheels 52 and in bends thereof a bend guide 54 is provided which prevents the possibility of mould container parts 30 falling out of transport device 4 of transport system 2. Mould container parts 30 are provided with side elements 34 which are supported by mould container guide 54 during passage through the bend (figures 7 and 8).

Further provided at the position of bend guide 54 are tensioning straps or chains (not shown) which press drying plates 44 against the associated mould container part 30 during passage through the bend.

Once rotated to a position in which mould container parts 30 hang upside down, mould container parts 30 are supported by support rollers 58 (figures 8 and 9).

Drying plates 44 are supported by a strip part arranged at an angle. This strip part is provided with wear material and, because of the angled arrangement, drying plate 44 with green bricks 46 lying thereon moves a little further away from mould container part 30 with each successive mould container displacement. Because the distance between drying plate 44 and mould container part 30 gradually increases, the green bricks 46 lying on drying plate 44 move gradually downward out of mould cavities 32.

By slowly increasing the distance between drying plates 44 and mould container parts 30 as mould container parts 30 advance further in the direction of transport R the green bricks 46 present in mould cavities 32 gradually move a distance of about 10 mm clear of the bottom of mould cavities 32, whereby air can flow between the bottom of mould cavities 32 and green bricks 46. This prevents green bricks 46 adhering to mould cavities 32 and becoming misshapen during further release.

Now that green bricks 46 have been released to some extent from the bottom of mould cavities 32, in a subsequent process step they can be released more quickly and without the danger of adhesion (delayed drop). Provided for this purpose between conveyors 6 are vibrating means (not shown) which set the mould container parts 30 into vibration.

Under the combined influence of gravitational force and the vibrations generated by the vibrating means the green bricks 46 will be wholly released at the position of descending support 62. Drying plates 44 with green bricks 46 lying thereon are then discharged over a discharge conveyer 70 for further treatment, such as drying and firing thereof to form a brick.

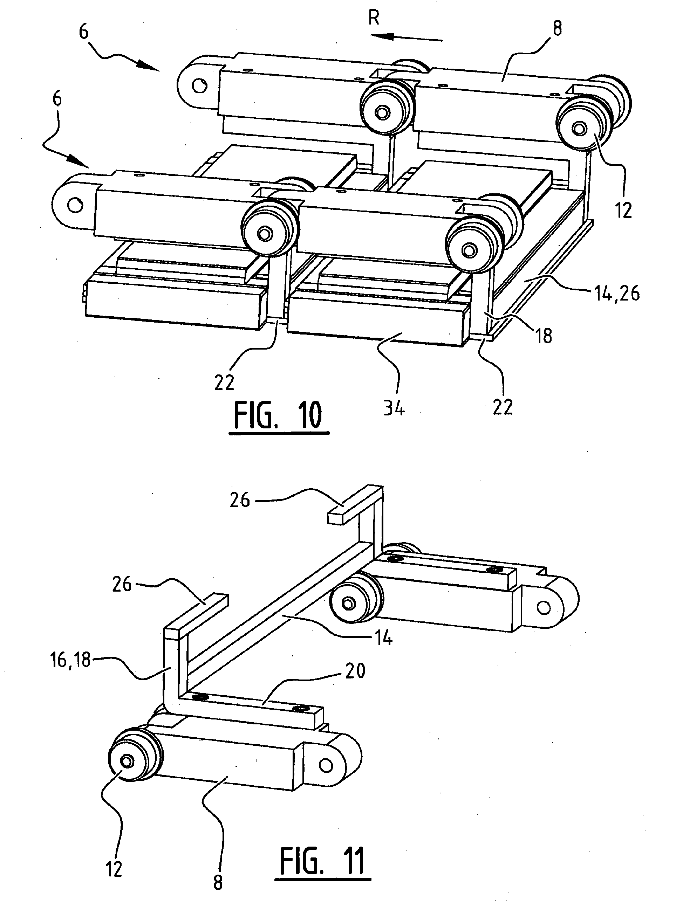

The mould container parts 30 which are now empty are transported further in hanging position in transport direction R (figure 10) where they are successively washed by a washing device 64, suctioned out by a suction device 66 and covered with sand by a sand-covering means 68.

It is possible to envisage the bend close to the rear chain wheel 52 being opened or removed, whereby mould container parts 30 to be exchanged will run straight on here. Alternatively, mould container parts 30 to be exchanged can be lifted away from chain wheel 52 as they pass through the bend around chain wheel 52.

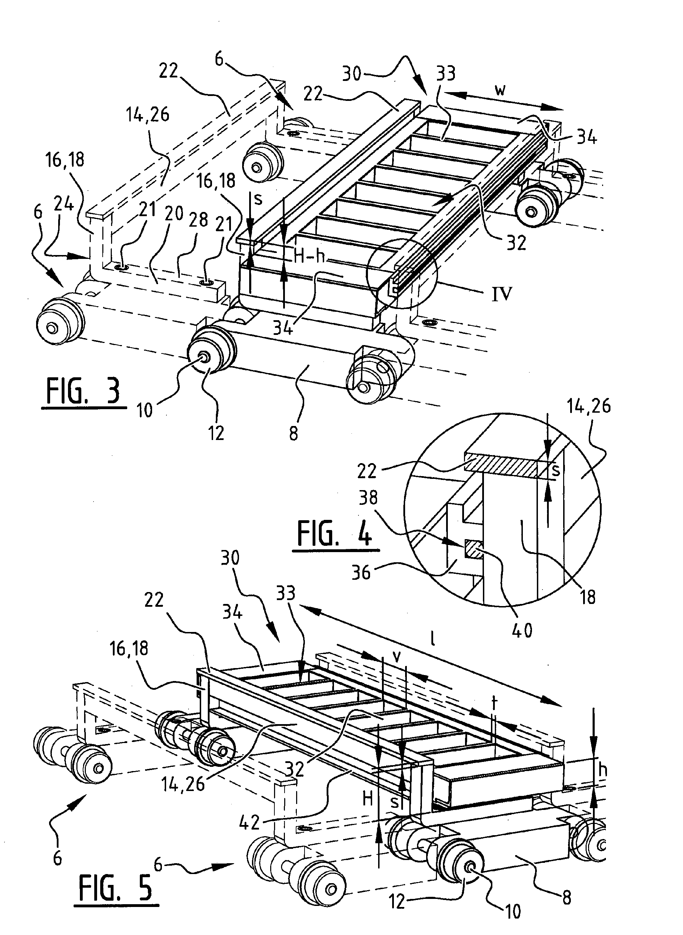

The perspective views of figures 3 and 5 show how two conveyors 6 are chain conveyors assembled from link parts 8. Link parts 8 are connected to each other with shafts 10, and provided on the outer ends of these shafts 10 are travel rollers 12 engageable by the chain wheels 52 shown in figure 1.

Connecting members 14 which mutually connect the two conveyors 6 are provided between conveyors 6.

In the shown embodiment bearing strips 20 forming mould container part bearing surfaces 28 are attached to conveyors 6 using bolts 21. A single wear part which is easily replaceable is obtained by embodying the bearing strip integrally with finger part 18.

Finger parts 18 extend outside the path of the conveyors transversely of travel direction R of the conveyors, and function as mould container part displacers 16.

Mounted on finger parts 18 is a drying plate displacer 26 which in the shown embodiment is also the connecting member 14 mutually connecting the two conveyors 6. Because connecting member 14 extends along the whole length between the two conveyors, a sealing function between adjacent mould container parts 30 can also be fulfilled by combining the connecting member 14 and drying plate displacer 26.

Integration of connecting member 14 and drying plate displacer 26 moreover reduces the number of components of transport device 4 of transport system 2.

Mould container part 30 has a height h and drying plate displacers 26 extend out of the mould container part bearing surface 28 at least a distance H which is greater than the height h of mould container part 30.

In the shown preferred embodiment a wear strip 22 with a thickness s is arranged on top of connecting member 14. Such a wear strip 22 forms part of drying plate displacer 26, whereby the height H over which drying plate displacer 26 extends from the mould container part bearing surface 28 is the combined height of finger parts 18 and the wear strip 22 optionally arranged thereon.

Mould container parts 30 further comprise side elements 34 and stop parts arranged on the longitudinal sides thereof in the form of a strip 42 and a profile part 36.

Strips 42 and/or one or more profile parts 36 preferably extend over substantially the whole distance between finger parts 18 on the longitudinal sides of mould container part 30, wherein the finger parts 18 extending from conveyors 6 function as stop for the strips 42 and/or profile parts 36 situated between finger parts 18 and thus form a limitation to the longitudinal movement of mould container parts 30.

By making the length of strips 42 and/or profile parts 36 arranged between finger parts 18 to at least some extent shorter than the distance between finger parts 18, in a particular embodiment mould container part 30 becomes reciprocally displaceable in longitudinal direction over this difference in length. It is hereby possible to displace mould cavities 32 in mould container part 30 under clay supplying means (not shown) of an Aberson device, this enabling filling thereof in successive steps.

In order to enable displacing of at least one mould cavity 32, in such an embodiment the strips 42 and/or profile parts 36 are the combined distance v+t of at least one mould cavity width v and thickness t of the partition between adjacent mould cavities 32 shorter than the distance between finger parts 18.

Shown in the detail view of figure 4 is that profile part 36 is provided with a recess 38 in which a resilient seal 40 can be received. This resilient seal 40 is configured to connect to a finger part 18 functioning as the mould container part displacer 16 of an adjacent mould container part 30. Seal 40 prevents the possibility of clay dropping between adjacent mould container parts 30.

In the shown embodiment wear strip 22 arranged on finger part 18 protrudes to some extent outside finger part 18 in rearward direction, whereby the underside of wear strip 22 functions as stop for the side of profile part 36 remote from conveyors 6. In the lower path of transport system 2 the mould container parts 30 hang upside down, and mould container part 30 is supported by the above stated contact between wear strip 22 and profile part 36.

It is otherwise noted that other bearing surfaces can also be envisaged from which mould container parts 30 with their profile part 36 and/or strip 42 can hang in the lower path, such as for instance connecting member 14 and/or drying plate displacer 26.

Figure 10 shows an alternative embodiment, wherein drying plate displacer 26 and the connecting member are separate components.

Although they show preferred embodiments of the invention, the above described embodiments are intended only to illustrate the present invention and not to limit the scope of the invention in any way. It is particularly noted that the skilled person can combine technical measures of the different embodiments. The described rights are defined by the following claims, within the scope of which many modifications can be envisaged.

## Claims

1. Transport system (2) for circulating transport of one or more mould container parts (30), comprising:
- a transport device (4), comprising:
- at least two conveyors (6) arranged some distance adjacently of each other and mutually connected with one or more connecting members (14);
- wherein at least one mould container part displacer (16) extending some distance outside the path of the conveyors (6) is arranged on or close to each connecting member (14); and
- wherein close to each connecting member (14) are provided one or more drying plate displacers (26) which extend out of a mould container part bearing surface (28) at least a distance (H) which is greater than the height (h) of a mould container part (30) for the purpose of supporting the mould container parts (30) on the conveyor (6);
- at least one mould container part (30) arrangeable non-fixedly on the mould container part bearing surfaces (28) and against the one or more mould container part displacers (16) and comprising one or more mould cavities (32) for forming therein a green brick (46) from clay;
- wherein height displacing means are provided with which the mould container part (30) is displaceable in the height;
**characterized in that** the mould container part (30) is displaceable between a raised filling position and a lowered transport position using the height displacing means;
- wherein the upper side of the mould container part (30) in the raised filling position connects substantially flush with the upper side of the drying plate displacer (26) or a wear strip (22) optionally arranged thereon; and
- wherein the mould container part (30) is supported in the lowered transport position by the mould container part bearing surface (28) of the conveyor, and the drying plate displacer (26) extends some distance above the upper side of the mould container part (30).

2. Transport system as claimed in claim 1, wherein on at least one of the two longitudinal sides of the mould container part (30) are provided one or more protruding stop parts (42, 36) which, in a lower path in which the mould container parts (30) hang upside down, are supported by the connecting member (14) and/or the drying plate displacer (26).

3. Transport system as claimed in any of the foregoing claims, wherein the one or more connecting members (14) which mutually connect the conveyors (6) are themselves also configured as the drying plate displacers (26), and for this purpose extend out of the mould container part bearing surface (28) on the conveyor (6) at least a distance (H) which is greater than the height (h) of a mould container part (30).

4. Transport system as claimed in any of the foregoing claims, wherein the mould container part displacer (16) comprises at least two finger parts (18) which extend some distance out of the paths of the conveyors (6) and which are connected directly or indirectly to the conveyors (6).

5. Transport system as claimed in claim 4, wherein the one or more stop parts comprise one or more strips (42) and/or one or more profile parts (36) arranged over substantially the whole distance between the finger parts (18) on the longitudinal sides of the mould container part (30), wherein the finger parts (18) extending from the conveyors (6) function as stop for the strips (42) and/or profile parts (36) present between the finger parts (18) and thus form a limitation to the longitudinal movement of the mould container part (30).

6. Transport system as claimed in claim 5, wherein the length of the strips (42) and/or the profile parts (36) arranged between the finger parts (18) is at least the combined distance of one mould cavity width (v) and one thickness (t) of a partition (33) shorter than the distance between the finger parts (18), so that the mould container part (30) is reciprocally displaceable at least over this distance (v+t) in its longitudinal direction.

7. Transport system as claimed in claim 5 or 6, wherein the one or more profile parts (36) comprise at least one recess (38) which is arranged in longitudinal direction and in which a resilient seal (40) can be accommodated.

8. Device (1) for manufacturing green bricks (46) from clay for the brick manufacturing industry, comprising a transport system (2) with a transport device (4) and one or more mould container parts (30) as claimed in any of the foregoing claims.

9. Device as claimed in claim 8, wherein the device (1) is a pressing device comprising a filling station (48) for pressing clay under pressure into the mould cavities (32); and wherein the mould container parts (30) are supported in a raised filling position at the location of the filling station (48) by a supporting device (72) arranged between the conveyors situated some distance from each other.

10. Device as claimed in claim 8 or 9, further comprising vibrating means (60) which are arranged in the lower path, in which the mould container parts (30) hang upside down, between the conveyors (6) situated some distance from each other and which are configured to set the mould container parts (30) into vibration at this position such that the green bricks (46) present in the mould cavities (32) release from the mould cavities (32) under the combined influence of gravitational force and vibration.

11. Method for transporting one or more mould container parts (30) with a transport system (2) as claimed in any of the claims 1-7 in a device (1) as claimed in any of the claims 8-10, comprising the steps of:
- displacing the mould container part (30) to a raised filling position with height displacing means during or prior to filling of the mould cavities (32) present in the mould container part (30) with clay;
- filling the mould cavities (32) in the mould container part (30) with clay using a filling station (48);
- trimming clay protruding from the mould cavities (32) above the upper side of the mould container part (30) using trimming means (50);
- displacing the mould container part (30) from the raised filling position to a lowered transport position using height displacing means, wherein the mould container part (30) is supported in this lowered transport position by the mould container part bearing surface of the conveyor, and the drying plate displacer (26) extends some distance above the upper side of the mould container part (30); and
- co-displacing with the drying plate displacer (26) a drying plate (44) arranged on the upper side of the mould container part (30).

12. Method as claimed in claim 11, further comprising the step of supporting the mould container parts (30) with a supporting device (72) at least during the filling step under the filling station (48).

13. Method as claimed in claim 12, further comprising the step of setting the mould container parts (30) into vibration in the lower path using vibrating means arranged between the conveyors (6) located some distance from each other, so that the green bricks (46) present in the mould cavities (32) release from the mould cavities (32) under the combined influence of gravitational force and vibration.

## Patentansprüche

1. Ein Transportsystem (2) zum umlaufenden Transportieren von einem oder mehreren Formbehälterteilen (30), aufweisend:
- eine Transportvorrichtung (4), aufweisend:
- mindestens zwei Förderer (6), welche in einigem Abstand voneinander benachbart angeordnet und untereinander mit einem oder mehreren Verbindungsteilen (14) verbunden sind,
- wobei mindestens ein Formbehälterteil-Verschieber (16), welcher sich über einige Distanz außerhalb der Förderstrecke der Förderer (6) erstreckt, an jedem oder nahe jedem Verbindungsteil (14) angeordnet ist, und
- wobei nahe jedem Verbindungsteil (14) eine oder mehrere Trocknungsplatten-Verschieber (26) bereitgestellt sind, welche sich aus einer Formbehälterteil-Auflagerfläche (28) zumindest um eine Distanz (H) hinaus erstrecken, welche größer ist als die Höhe (h) eines Formbehälterteils (30), für den Zweck des Stützens des Formbehälterteils (30) auf dem Förderer (6),
- mindestens ein Formbehälterteil (30), welches in nicht festgelegter Weise auf den Formbehälterteil-Auflagerflächen (28) und gegen den einen oder mehreren Formbehälterteil-Verschiebern (16) angeordnet werden kann, und welches aufweist eine oder mehrere Formkavitäten (32), um darin einen Formling (46) aus Ton zu formen,
- wobei Höhenverschiebungsmittel bereitgestellt sind, mit welchen das Formbehälterteil (30) in der Höhe verschiebbar ist,
**dadurch gekennzeichnet, dass** das Formbehälterteil (30) zwischen einer höherliegenden Befüllposition und einer tieferliegenden Transportposition unter Verwendung der Höhenverschiebungsmittel verschiebbar ist,
- wobei die obere Seite des Formbehälterteils (30) in der höherliegenden Befüllposition im Wesentlichen bündig an der oberen Seite des Trocknungsplatten-Verschiebers (26) oder einer optional darauf angeordneten Verschleißleiste (22) anschließt, und
- wobei das Formbehälterteil (30) in der tieferliegenden Transportposition von der Formbehälterteil-Auflagerfläche (28) des Förderers (6) gestützt wird und der Trocknungsplatten-Verschieber (26) sich einige Distanz über der oberen Seite des Formbehälterteils (30) erstreckt.

2. Transportsystem gemäß Anspruch 1, wobei an mindestens einer der zwei Längsseiten des Formbehälterteils (30) ein oder mehrere vorstehende Sperrteile (42, 36) bereitgestellt sind, welche in einer unteren Förderstrecke, in der das Formbehälterteil (30) mit der Oberseite nach unten hängt, durch den Verbindungsteil (14) und/oder den Trocknungsplatten-Verschieber (26) gestützt werden.

3. Transportsystem gemäß irgendeinem der vorangegangenen Ansprüche, wobei der eine oder die mehreren Verbindungsteile (14), welche die Förderer (6) untereinander verbinden, ihrerseits auch als Trocknungsplatten-Verschieber (26) konfiguriert sind und sich zu diesem Zweck über zumindest eine Distanz (H), welche größer ist als die Höhe (h) eines Formbehälterteils (30), aus der Formbehälter-Auflagerfläche (28) auf dem Förderer (6) hinaus erstrecken.

4. Transportsystem gemäß irgendeinem der vorangegangenen Ansprüche, wobei der Formbehälterteil-Verschieber (16) aufweist mindestens zwei Fingerteile (18), welche sich über einige Distanz aus den Förderstrecken der Förderer (6) hinaus erstrecken und welche direkt oder indirekt mit den Förderern (6) verbunden sind.

5. Transportsystem gemäß Anspruch 4, wobei das eine oder die mehreren Sperrteile aufweisen einen oder mehrere Streifen (42) und/oder ein oder mehrere Profilteile (36), welche über im Wesentlichen die gesamte Distanz zwischen den Fingerteilen (18) an den Längsseiten des Formbehälterteils (30) angeordnet sind, wobei die sich von den Förderern (6) aus erstreckenden Fingerteile (18) als Stopper für die Streifen (42) und/oder die Profilteile (36) funktionieren, die zwischen den Fingerteilen (18) vorliegen, und dadurch eine Begrenzung der Längsbewegung des Formbehälterteils (30) bilden.

6. Transportsystem gemäß Anspruch 5, wobei die Länge der Streifen (42) und/oder der Profilteile (36) die zwischen den Fingerteilen (18) angeordnet sind, mindestens der kombinierten Distanz aus einer Formkavitätbreite (v) und einer Dicke (t) einer Trennwand (33) entspricht, welche kürzer ist als die Distanz zwischen den Fingerteilen (18), sodass das Formbehälterteil (30) zumindest über diese Distanz (v+t) in seiner Längsrichtung wechselseitig verschiebbar ist.

7. Transportsystem gemäß Anspruch 5 oder Anspruch 6, wobei das eine oder die mehreren Profilteile (36) mindestens eine Ausnehmung (38) aufweisen, welche in Längsrichtung angeordnet ist, und in welcher eine elastische Dichtung (40) aufgenommen werden kann.

8. Vorrichtung (1) zum Herstellen von Formlingen (46) aus Ton für die Ziegelindustrie, aufweisend ein Transportsystem (2) mit einer Transportvorrichtung (4) und einem oder mehreren Formbehälterteilen (30) gemäß irgendeinem der vorangegangenen Ansprüche.

9. Vorrichtung gemäß Anspruch 8, wobei die Vorrichtung (1) eine Pressvorrichtung ist, aufweisend eine Befüllstation (48) zum Pressen von Ton unter Druck in die Formkavität (32), und wobei die Formbehälterteile (30) in einer höherliegenden Befüllposition an der Stelle der Befüllstation (48) durch eine Stützvorrichtung (72) gestützt werden, welche zwischen den sich in einem Abstand zueinander befindenden Förderern (6) angeordnet ist.

10. Vorrichtung gemäß Anspruch 8 oder 9, weiter aufweisend Vibrationsmittel (60), welche in der unteren Förderstrecke, in der die Formbehälterteile (30) mit der Oberseite nach unten hängen, zwischen den Förderern (6) in einigem Abstand zueinander angeordnet sind, und welche konfiguriert sind, um die Formbehälterteile (30) in dieser Position in Vibration zu versetzen, sodass sich die in den Formkavitäten (32) befindenden Formlinge (46) durch den kombinierten Einfluss von Gravitationskraft und Vibration aus den Formkavitäten (32) lösen.

11. Verfahren zum Transportieren von einem oder mehreren Formbehälterteilen (30) mit einem Transportsystem (2) gemäß irgendeinem der Ansprüche 1 bis 7 in einer Vorrichtung (1) gemäß irgendeinem der Ansprüche 8 bis 10, aufweisend folgende Schritte:
- Verschieben des Formbehälterteils (30) in eine höherliegende Befüllposition mittels Höhenverschiebungsmitteln während oder vor dem Befüllen der sich in dem Formbehälterteil (30) befindenden Formkavitäten (32) mit Ton,
- Befüllen der Formkavitäten (32) in dem Formbehälterteil (30) mit Ton unter Verwendung einer Befüllstation (48),
- Trimmen von aus den Formkavitäten (32) über die Oberseite des Formbehälterteils (30) hervorstehendem Ton unter Verwendung von Trimmmitteln (50),
- Verschieben des Formbehälterteils (30) aus der höherliegenden Befüllposition in eine tieferliegende Transportposition unter Verwendung von Höhenverschiebungsmitteln, wobei das Formbehälterteil (30) in dieser tieferliegenden Transportposition durch die Formbehälterteil-Auflagerfläche des Förderers gestützt ist, und sich der Trocknungsplatten-Verschieber (26) einige Distanz über der oberen Seite des Formbehälterteils (30) erstreckt, und
- Mitverschieben einer Trocknungsplatte (44) mit dem Trochnungsplatten-Verschieber (26), wobei die Trocknungsplatte (44) an der oberen Seite des Formbehälterteils (30) angeordnet ist.

12. Verfahren gemäß Anspruch 11, weiter aufweisend den Schritt des Stützens der Formbehälterteile (30) mit einer Stützvorrichtung (72) unter der Befüllstation (48) zumindest während des Befüllvorgangs.

13. Verfahren gemäß Anspruch 12, weiter aufweisend den Schritt des In-Vibration-setzens der Formbehälterteile (30) in der unteren Förderstrecke unter Verwendung von Vibrationsmitteln, welche zwischen den Förderern (6) mit einigem Abstand zueinander angeordnet sind, sodass sich die in den Formkavitäten (32) befindenden Formlinge (46) durch den kombinierten Einfluss von Gravitationskraft und Vibration aus den Formkavitäten (32) lösen.

## Revendications

1. Système de transport (2) pour le transport circulant d'une ou de plusieurs parties de récipient de moulage (30), comprenant :
un dispositif de transport (4) comprenant :
au moins deux transporteurs (6) agencés sur une certaine distance, de manière adjacente entre eux et mutuellement raccordés avec un ou plusieurs éléments de raccordement (14) ;
dans lequel au moins un dispositif de déplacement de partie de récipient de moulage (16) s'étendant sur une certaine distance à l'extérieur de la trajectoire des transporteurs (6) est agencé sur ou à proximité de chaque élément de raccordement (14) ; et
dans lequel, à proximité de chaque élément de raccordement (14), on prévoit un ou plusieurs dispositifs de déplacement de plaque de séchage (26) qui s'étendent à l'extérieur de la surface de support de partie de récipient de moulage (28) au moins sur une distance (H) qui est supérieure à la hauteur (h) de la partie de récipient de moulage (30) afin de supporter les parties de récipient de moulage (30) sur le transporteur (6) ;
au moins une partie de récipient de moulage (30) pouvant être agencée de manière non fixe sur les surfaces de support de partie de récipient de moulage (28) et contre le ou les plusieurs dispositifs de déplacement de partie de récipient de moulage (16) et comprenant une ou plusieurs cavités de moule (32) pour former à l'intérieur de ces dernières, une brique crue (46) à partir d' argile ;
dans lequel on prévoit des moyens de déplacement en hauteur avec lesquels la partie de récipient de moulage (30) peut être déplacée en hauteur ;
**caractérisé en ce que** la partie de récipient de moulage (30) peut être déplacée entre une position de remplissage levée et une position de transport abaissée en utilisant les moyens de déplacement en hauteur ;
dans lequel, le côté supérieur de la partie de récipient de moulage (30), dans la position de remplissage levée, se raccorde sensiblement de niveau avec le côté supérieur du dispositif de déplacement de plaque de séchage (26) ou une bande d'usure (22) facultativement agencée sur ce dernier ; et
dans lequel la partie de récipient de moulage (30) est supportée dans la position de transport abaissée par la partie de support de partie de récipient de moulage (28) du transporteur, et le dispositif de déplacement de plaque de séchage (26) s'étend sur une certaine distance au-dessus du côté supérieur de la partie de récipient de moulage (30).

2. Système de transport selon la revendication 1, dans lequel sur au moins l'un des deux côtés longitudinaux de la partie de récipient de moulage (30), on prévoit une ou plusieurs parties de butée en saillie (42, 36) qui, dans une trajectoire inférieure dans laquelle les parties de récipient de moulage (30) sont suspendues à l'envers, sont supportées par l'élément de raccordement (14) ou le dispositif de déplacement de plaque de séchage (26).

3. Système de transport selon l'une quelconque des revendications précédentes, dans lequel le ou les plusieurs éléments de raccordement (14) qui raccordent mutuellement les transporteurs (6), sont eux-mêmes également configurés comme les dispositifs de déplacement de plaque de séchage (26), et à cette fin, s'étendent à l'extérieur de la surface de support de partie de récipient de moulage (28) sur le transporteur (6) au moins sur une distance (H) qui est supérieure à la hauteur (h) d'une partie de récipient de moulage (30).

4. Système de transport selon l'une quelconque des revendications précédentes, dans lequel le dispositif de déplacement de partie de récipient de moulage (16) comprend au moins deux parties de doigt (18) qui s'étendent sur une certaine distance hors des trajectoires des transporteurs (6) et qui sont raccordées directement ou indirectement aux transporteurs (6).

5. Système de transport selon la revendication 4, dans lequel la ou les plusieurs parties de butée comprennent une ou plusieurs bandes (42) ou une ou plusieurs parties de profil (36) agencées sensiblement sur toute la distance entre les parties de doigt (18) sur les côtés longitudinaux de la partie de récipient de moulage (30), dans lequel les parties de doigt (18) s'étendant à partir des transporteurs (6) servent de butée pour les bandes (42) ou les parties de profil (36) présentes entre les parties de doigt (18) et forment ainsi une limite au mouvement longitudinal de la partie de récipient de moulage (30).

6. Système de transport selon la revendication 5, dans lequel la longueur des bandes (42) ou des parties de profil (36) agencées entre les parties de doigt (18) est au moins la distance combinée d'une largeur de cavité de moule (v) et d'une épaisseur (t) d'une séparation (33) plus courte que la distance entre les parties de doigt (18), de sorte que la partie de récipient de moulage (30) peut être déplacée selon un mouvement de va-et-vient au moins sur cette distance (v+t) dans sa direction longitudinale.

7. Système de transport selon la revendication 5 ou la revendication 6, dans lequel la ou les plusieurs parties de profil (36) comprennent au moins un évidement (38) qui est agencé dans la direction longitudinale et dans lequel un joint d'étanchéité élastique (40) peut être logé.

8. Dispositif (1) pour fabriquer des briques crues (46) à partir d'argile pour l'industrie de la fabrication des briques, comprenant un système de transport (2) avec un dispositif de transport (4) et une ou plusieurs parties de récipient de moulage (30) selon l'une quelconque des revendications précédentes.

9. Dispositif selon la revendication 8, dans lequel le dispositif (1) est un dispositif de pression comprenant une station de remplissage (48) pour mettre l'argile sous pression dans les cavités de moule (32) ; et dans lequel les parties de récipient de moulage (30) sont supportées dans une position de remplissage levée à l'emplacement de la station de remplissage (48) par un dispositif de support (72) agencé entre les transporteurs situés à une certaine distance les uns des autres.

10. Dispositif selon la revendication 8 ou la revendication 9, comprenant en outre des moyens vibrants (60) qui sont agencés dans la trajectoire inférieure, dans laquelle les parties de récipient de moulage (30) sont suspendues à l'envers, entre les transporteurs (6) situés à une certaine distance les uns des autres et qui sont configurées pour faire vibrer les parties de récipient de moulage (30) dans cette position de sorte que les briques crues (46) présentes dans les cavités de moule (32) se démoulent des cavités de moule (32) sous l'influence combinée de la force gravitationnelle et de la vibration.

11. Procédé pour transporter une ou plusieurs parties de récipient de moulage (30) avec un système de transport (2) selon l'une quelconque des revendications 1 à 7 dans un dispositif (1) selon l'une quelconque des revendications 8 à 10, comprenant les étapes consistant à :
déplacer la partie de récipient de moulage (30) dans une position de remplissage levée avec des moyens de déplacement en hauteur avant ou pendant le remplissage des cavités de moule (32) présentes dans la partie de récipient de moulage (30), avec de l'argile ;
remplir les cavités de moule (32) dans la partie de récipient de moulage (30) avec de l'argile à l'aide d'une station de remplissage (48) ;
couper l'argile faisant saillie des cavités de moule (32) au-dessus du côté supérieur de la partie de récipient de moulage (30) en utilisant des moyens de coupe (50) ;
déplacer la partie de récipient de moulage (30) de la position de remplissage levée à une position de transport abaissée en utilisant les moyens de déplacement en hauteur, dans lequel la partie de récipient de moulage (30) est supportée dans cette position de transport abaissée par la surface de support de partie de récipient de moulage du transporteur, et le dispositif de déplacement de plaque de séchage (26) s'étend sur une certaine distance au-dessus du côté supérieur de la partie de récipient de moulage (30) ; et
déplacer conjointement avec le dispositif de déplacement de plaque de séchage (26), une plaque de séchage (44) agencée sur le côté supérieur de la partie de récipient de moulage (30).

12. Procédé selon la revendication 11, comprenant en outre l'étape consistant à supporter les parties de récipient de moulage (30) avec un dispositif de support (72) au moins pendant l'étape de remplissage sous la station de remplissage (48).

13. Procédé selon la revendication 12, comprenant en outre l'étape consistant à faire vibrer les parties de récipient de moulage (30) dans la trajectoire inférieure à l'aide des moyens vibrants agencés entre les transporteurs (6) positionnés à une certaine distance les uns des autres, de sorte que les briques crues (46) présentes dans les cavités de moule (32) se démoulent des cavités de moule (32) sous l'influence combinée de la force gravitationnelle et de la vibration.
